# EUROPEAN PATENT APPLICATION

(11) **EP 3 020 675 A1**
(43) Date of publication of application: **18.05.2016**
(21) Application number: 15194619.1
(22) Date of filing: 13.11.2015
(51) Int. Cl.: B66C 13/46, B66C 13/48, B66C 17/00, G06Q 10/08

(54) **SYSTEM AND METHOD FOR HANDLING LOADS IN FORM OF COILS OR ROLLS, SUCH AS METAL SHEET COILS**

(30) Priority: 14.11.2014 IT MI20141974
(71) Applicant: De Carli, Giovanni, 20162 Milano (IT)
(72) Inventor: De Carli, Giovanni, 20162 Milano (IT)
(74) Representative: Bonatto, Marco

(57) **Abstract**

A system (1) for handling loads in form of coils or rolls (Cᵢ) such as for example metal sheet coils, comprising:
-one or more first cranes (3) selected from the following group:
overhead traveling crane (3), gantry crane, bridge crane, lame gantry crane;
-one or more sensors (15A - 15C) arranged for detecting the presence and/or the position of a predetermined load (Cᵢ) to be moved;
-a logic unit (17) programmed, or in any case provided, for controlling the movements with which the one or more overhead traveling cranes or other cranes (3) grasp, transport and release the loads to be moved according to the detections of the one or more sensors (15A - 15C).

## Description

### Field of the invention

The present invention concerns a system and a method for handling loads such as for example metal sheet coils or other loads in form of coils or rolls.

### State of the art

In iron and steel works buildings or in large warehouses for distributing and selling bands of steel, finished or retail metal sheet coils are currently handled with overhead traveling cranes controlled by operators that must have the coils within eyesight during handling.

In cases in which the overhead traveling crane is controlled by an operator on the ground through a keypad connected to the rest of the overhead traveling crane with a hanging cable or via radio, the operator is forced to be located in areas that are inevitably and intrinsically dangerous, for example under or in any case very close to suspended loads, close to loads or parts of the moving overhead traveling crane, or even close to stacks of coils to be moved.

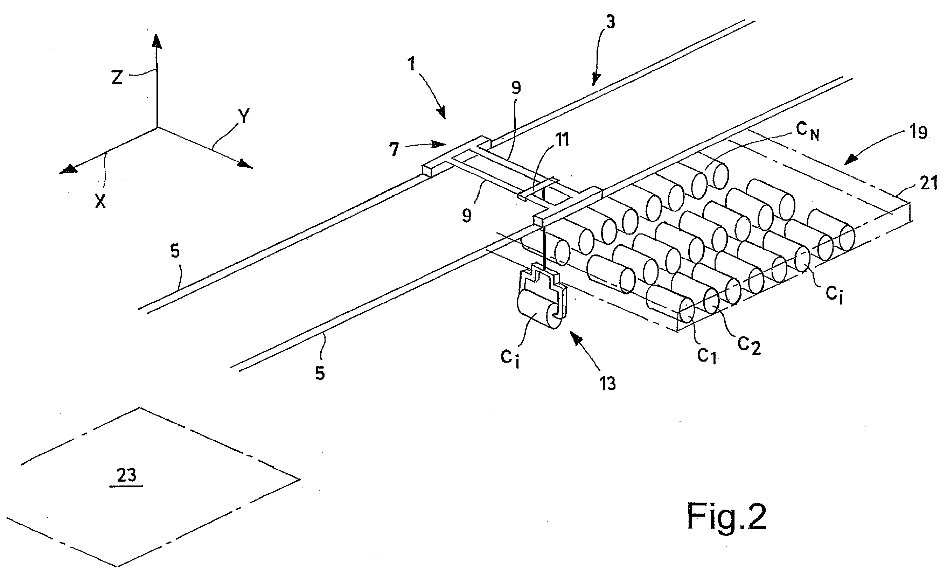

For example, in order to be able to clearly see and correctly control the manoeuvres of the grippers of an overhead traveling crane to pick up a coil, an operator is currently forced to stay a few metres from the grippers and from the coil (Figure **2**).

Moreover, while a coil is being picked up from a store, or to put it back there, the operator is very often positioned under stacks of coils at risk of falling, a risk that is even greater if the manoeuvres are poorly performed.

Large sized overhead traveling cranes, equipped with a cabin for the operator situated on its mobile beam, eliminate or substantially reduce these risks since the person operating the overhead traveling crane is constantly above all of the suspended loads and all those put in the store or in the warehouse. However, in many cases it is possible or economically advantageous to install only smaller overhead traveling cranes, without a cabin and only able to be controlled from the ground.

A purpose of the present invention is to avoid the aforementioned drawbacks and in particular to provide a system for handling and possibly storing loads for example in form of coils or rolls, which is safer than known systems.

### Summary of the invention

Such a purpose is achieved, in a first aspect of the present invention, with a system for handling loads in form of coils or rolls having the features according to claim **1**.

In a particular embodiment of such a system (**1**), the sensors (**15**A-**15**C) are of one or more types selected from the following group: videocameras, laser sensors such as for example laser distance measurers or laser-scanners, photocells, ultrasonic sensors, electromagnetic sensors such as for example induction sensors or electrical capacity sensors, mechanical touch-trigger sensors, proximity sensors, pressure sensors or other force sensors, accelerometers, sensors based on gyroscopic effects or other inertial effects, encoders, resolvers or other linear or angular displacement transducers.

In a particular embodiment of such a system, the overhead traveling crane comprises two main sliding guides (**5**), a carriage assembly (**7**) mounted so as to be able to slide along the main sliding guides (**5**) and provided with a hoist device (**10**) which in turn comprises one or more hoisting ropes or chains and a grasping assembly (**13**) hanging from the one or more hoisting ropes or chains, and the one or more sensors (**15**A-**15**C) are located at least on board of the grasping assembly (**13**).

In a particular embodiment, such a system is arranged for automatically picking up a plurality of predetermined loads (Cᵢ, Cⱼ) from the store or warehouse (**19**) and transferring them in one or more other predetermined positions (**23**) operating for at least one minimum automatic operating period of a duration equal to or greater than **15** minutes; possibly the duration of the minimum automatic operating period is equal to or greater than one of the following values: **30** minutes, one hour, two hours, four hours, eight hours.

In a second aspect of the invention, such a purpose is achieved with a method for handling loads in form of coils or rolls having the features according to claim **13**.

In a third aspect of the invention, such a purpose is achieved with a method for handling loads in form of coils or rolls having the features according to claim **14**.

In a particular embodiment, such a method comprises the following steps:
S**15**.a) through the logic unit (**17**) automatically controlling the one or more overhead traveling cranes or other cranes (**3**) so that the latter pick up the one or more predetermined loads (Cᵢ, Cⱼ) from the store or warehouse (**19**) and transfer them to one or more predetermined destination positions (**23**);
S**15**.b) repeating the step S**15**.a) for at least one minimum automatic operating period of a duration equal to or greater than **15** minutes.

In a particular embodiment, such a method comprises the following steps:
- arranging one or more loads to be moved (Ci, Cj) in the temporary store (**23**) with the one or more second cranes (**31**);
- transferring the one or more loads to be moved (Ci, Cj) from the temporary store (**23**) to the definitive store (**19**) through the one or more first cranes (**3**), controlling the one or more first cranes (**3**) through the logic unit (**17**).

In a particular embodiment, such a method comprises the following steps:
- transferring one or more loads to be moved (Ci, Cj) from the definitive store (**19**) to the temporary store (**23**) through the one or more first cranes (**3**), controlling the one or more first cranes (**3**) through the logic unit (**17**).
- picking up the one or more loads to be moved (Ci, Cj) from the temporary store (**23**) through the one or more second cranes (**31**).

In a fourth aspect of the invention, such a purpose is achieved with a programme for a processor that, loaded and executed by a suitable logic unit, carries out the method according to claim **12** o **13**.

Further features of the device are the object of the dependent claims.

The advantages that can be obtained with the present invention will become clearer, to those skilled in the art, from the following detailed description of a particular non-limiting embodiment, illustrated with reference to the following schematic figures.

### List of Figures

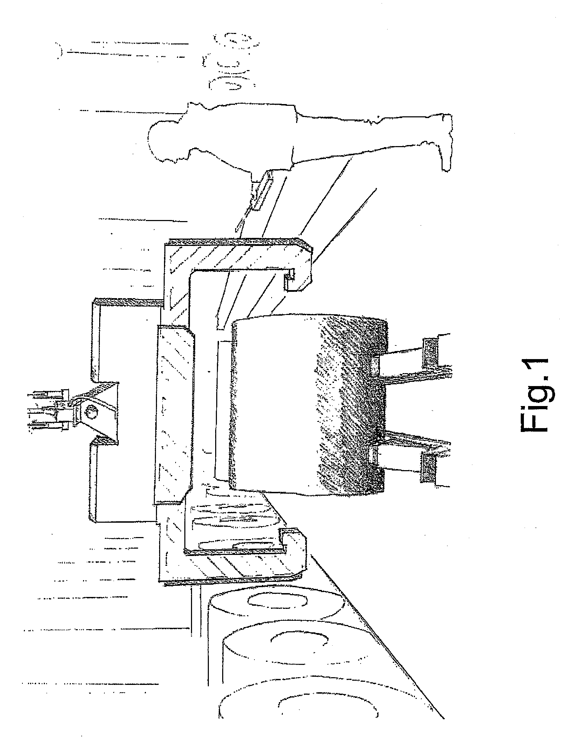

Figure **1** shows a perspective view of an instant of the handling of a metal sheet coil with an overhead traveling crane and of the known grippers;
Figure **2** shows a perspective view of a system for handling loads in form of coils or rolls, according to a first particular embodiment of the invention;
Figure **3** shows a functional diagram of the sensors and of the logic unit that controls the system of Figure **1**;
Figure **4** shows a perspective view of a gripper of the overhead traveling crane of the system of Figure **1**;
Figure **5** shows a view according to the axial direction of the coils, of two coils housed in respective cradles of the store or other limited-access area of the system of Figure **2**;
Figure **6** shows a perspective view of a system for handling loads in form of coils or rolls, according to a second particular embodiment of the invention.

### Detailed description

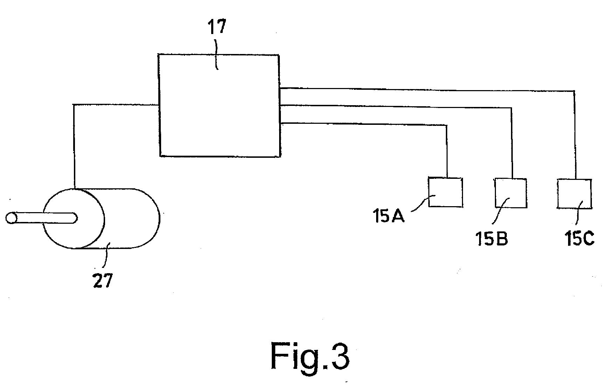

Figures **2-4** relate to a system according to a first particular embodiment of the invention, indicated with overall reference numeral **1**, for handling loads C in form of coils or rolls, for example to carry them to or take them from a store. Such a store can for example be at a steelworks that produces and must store metal sheet coils, or at a retail and distribution centre that receives them from a steelworks or from a port, railway station or other logistics centre and must store them for a certain time before selling them or in any case redistributing them.

Such a system is arranged for handling loads such as metal sheet coils. The system **1** can be provided to hoist and move rolls C of a weight for example comprised between **2-90** tons.

The system **1** comprises one or more first overhead traveling cranes **3** each of which in turn comprises two rails or other fixed sliding guides **5** - also called main sliding guides **5-** for example fixed to cement pillars of a building of a steelworks plant, and a carriage assembly **7** provided to slide along the fixed guides **5**, according to the direction X of the tern of Cartesian axes XYZ of Figure **2**.

The carriage assembly **7** can in turn comprise:
- a first carriage comprising two transverse beams **9**, slidably mounted on the fixed guides **5**; and
- a second carriage **11** mounted so as to be able to slide along the two transverse beams **9** along the direction Y of Figure **2**, and on which a hoist device **10** is mounted, to which a hoisting gripper **13** or another grasping assembly suitable for grasping a load C that may also not be a roll or a coil is hung, through chains or cables.

The system **1** also comprises:
- one or more sensors **15**A, **15**B, **15**C arranged for detecting the presence and/or the position of a load to be moved C**₁**, C**₂** ... Cᵢ ... C_{N};
- a logic unit **17** programmed, or in any case provided, for controlling the movements with which the one or more overhead traveling cranes **3** grasp, transport and release the loads to be moved Cᵢ according to the detections of the one or more sensors **15**A, **15**B, **15**C.

The logic unit **17** can for example comprise a programmable microprocessor. Each sensor **15**A, **15**B, **15**C can be of the following types: videocameras or other image acquisition devices, laser sensors such as for example laser distance measurers or laser-scanners in general, photocells, ultrasonic sensors, electromagnetic sensors such as for example induction sensors or electrical capacity sensors, mechanical touch-trigger sensors, proximity sensors, pressure sensors or other force sensors such as for example load cells, accelerometers, sensors based on gyroscopic effects or other inertial effects, encoders, resolvers or other linear or angular displacement transducers.

Advantageously, the first **9** and the second carriage **11** are provided with one or more linear displacement measurers, like for example encoders or resolvers, provided to detect:
- the position of the first carriage **9** along the fixed guides **5**;
- the position of the second carriage **11** along the longitudinal guides to the beams **9** of the first carriage;
- the winding or unwinding angle of the cables or chains of the hoist device **10**.

By detecting these three displacements it is possible to obtain the coordinates XYZ in three-dimensional space of the position of the grasping assembly **13**.

Accelerometers, gyroscopic sensors and other inertial effect sensors are particularly useful for controlling and effectively limiting - with automatic controls - the vibrations and the oscillations of the loads C suspended from the hoist device of the first and/or of the second overhead traveling crane.

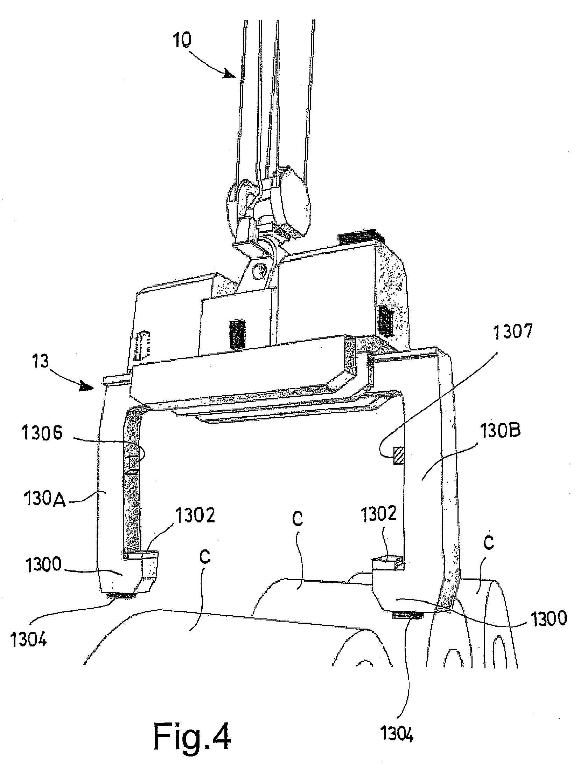

Figure **4** shows a type of gripper **13** particularly suitable for grasping and hoisting metal sheet coils: the two jaws **130**A, **130**B are each provided with an end **1300** that during normal operation is oriented upwards or projects horizontally allowing an end of the coil to rest upon it, inside the coil itself.

At least part of the aforementioned sensors **15**A-**15**C are preferably mounted on board the gripper **13** itself, or in any case on board the grasping assembly **13.** For example, advantageously load cells or other suitable pressure or force detectors **1302** capable of detecting the weight of the coil that is hoisted are preferably mounted on the ends **1300**, so as to confirm that it has been correctly grasped.

On a lower portion thereof the laws **130**A, **130**B are advantageously provided with load cells or other suitable detectors **1304** arranged for detecting the pressure or the force with which the jaws rest against an underlying floor or other obstacle, supplying useful auxiliary information to the logic unit **17** during the manoeuvres.

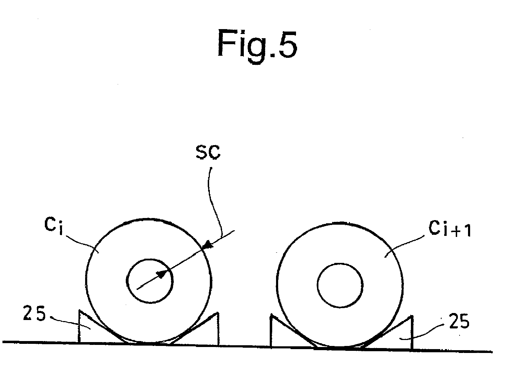

Each gripper **13** can be provided with a photo-emitter/photo-receiver pair, like for example a photocell system, arranged so that while a coil is grasped it is interposed between the photo-emitter **1306** and the receiver **1307** (Figure **4**): in this way, by detecting the shaded conditions of the emitter **1306** the photo-receiver **1307** provides useful information on whether or not the coil has been grasped successfully; for example, the fact that during the lowering of the gripper the photo-emitter **1306** is firstly shaded, and subsequently is visible again to the photo-receiver **1307**, can be used as an indication that the jaws **13**, lowering themselves, went past the whole thickness SC of the coil, reached the axial cavity thereof and the grippers are thus ready to be closed (Figure **5**).

For such a purpose preferably the photo-emitter **1306** and the receiver **1307** are each mounted on a different jaw **130**A, **130**B so that the ideal line that joins the receiver and the emitter is substantially horizontal during normal operation, and in any case longitudinal to the axis of the coils that must be picked up from a store or warehouse. Preferably, the receiver **1307** and the emitter **1306** are each mounted on an intermediate section that extends substantially vertically, of the jaws **130**A, **130**B.

Other sensors **15**A-**15**C can be advantageously mounted on board the first **9** or the second carriage **11** of the overhead traveling crane.

Advantageously, the logic unit **17** is arranged for storing the position in which a predetermined load C is positioned for example in a store or warehouse, and for determining in advance, according to such a stored position, the commands to move the at least one overhead traveling crane and for example pick up such a predetermined load.

For this purpose, the logic unit **17** can store a series of positions occupied in time by a load C, for example the various positions occupied by it in the same store for coils or the various positions occupied by it in different stores or warehouses. The logic unit **17** can translate and codify the position of a load C in various ways, for example by associating it with the coordinates of a triad of Cartesian axes in space and possibly also another triad of angles - or different set of angles - associated with the inclination and orientation of the load C in space, and for example associated with the inclination and orientation in space of the central axis of a coil C.

The store, definitive store or other limited-access area **19**, hereinafter described in greater detail and in which the coils that the overhead traveling crane **3** must move are placed, can be a simple floor or yard on which a single layer of coils is rested (Figure **2**), i.e. without stacking the coils on top of one another. The coils are advantageously rested in suitable cradles **25** *per se* known, so as to be arranged in a very precise and easily-repeatable position (Figure **5**).

The logic unit **17** can acquire the coordinates of each position occupied by a predetermined load Cᵢ for example by processing the detections of the various sensors **15**A-**15**C relative to such a load and storing the history of its movements; alternatively, the coordinates of each load Cᵢ can be supplied to the logic unit **17** manually by an operator through a keypad, touch-screen or other manual insertion peripherals. The logic unit **17** can be arranged for controlling one or more motors **27** of the overhead traveling crane **3**.

Advantageously, at least one of the sensors **15**A-**15**C comprises a barcode reader, for example of one-dimensional or two-dimensional barcodes, like for example matrix barcodes or QR codes. Each overhead traveling crane **3** is thus able to obtain information of various types contained in barcodes applied onto the loads to be managed Cᵢ, for example barcodes printed on adhesive labels applied to the coils.

The barcodes can for example show information relative to the producer, to the intended receiver or to particular physical characteristics of the coil - for example weight, dimensions like for example diameter and length, thickness of the metal sheet and of the overall wall of the coil, chemical composition or surface treatments of the metal sheet, so as to allow more verifications during the movement and a more articulated and complete management of a store or warehouse of the coils. The barcode readers can for example be laser scanners.

The system **1** can also comprise an anti-intrusion system that protects or monitors one or more limited-access areas **19** off-limits to operators, or to which the operators can gain access with stricter restrictions with respect to other areas of the factory or workshop.

Such limited-access or off-limits areas **19** can for example be stores or warehouses of coils or other material in coils, particularly dangerous for people due to the manoeuvres with which the grippers **13** pick up and release the coils Cᵢ close to the ground.

The anti-intrusion system can comprise anti-intrusion barriers **21** that delimit and enclose each limited-access area **19** blocking, or at least signalling, the entry of people into the areas **19**.

The barriers **21** can be of the passive type, i.e. simple mechanical barriers such as walls, substantially vertical grids, meshes or other mechanical fences, or electronic or opto-electronic barriers, i.e. delimited by, or in any case monitored with suitable beams of rays, waves or more generally monitoring emissions, for example laser beams, light beams or beams of electromagnetic waves of suitable frequencies, emissions of ultrasound or other acoustic waves.

The barriers **21** and **29**, described in greater detail hereinafter, may or may not be provided with doors, gates, dividing walls and other openings. In a further alternative, the barriers **21** can comprise one or more mechanical fences provided with suitable alarm and monitoring systems, like for example sensors that detect the opening or closing of a door, gate, dividing wall or other opening.

In a particular embodiment the barriers **21** can comprise one or more pairs of emitters-receivers of monitoring emissions - for example visible electromagnetic radiations or radiations close to the visible window, like for example infrared or ultraviolet radiations.

The anti-intrusion barrier **21** in this case is formed from the emitter-receiver pairs and from the same beams of monitoring emissions emitted by the emitters and received by the receivers; the intrusion of a person is detected for example because by passing through the barrier **21** he/she interrupts the beam of the monitoring emission, and the receiver no longer receives the signal emitted by the emitter.

In this case the anti-intrusion barrier **21** only checks the perimeter of the restricted-access area. In other embodiments one or more presence detectors - like for example television cameras or optical or infrared videocameras, other detectors of infrared rays or of other electromagnetic radiations, of ultrasound or other acoustic waves - can detect the presence in the entire area - or in the entire volume - of the restricted-access area, i.e. not only at its periphery but also within the restricted-access area.

Such systems can for example substantially exploit the principle of radar or in any case detect reflected echoes generated by people or objects that are wished to be detected. The anti-intrusion barrier **21** can be virtual and simply defined by a logic unit that detects the presence of a person within a certain area and therefore the crossing of its outer borders.

Advantageously, the system **1** comprises a temporary store area **23** arranged for temporarily parking the coils or other loads C for example unloaded from a lorry or train and intended for the warehouse or another limited-access area **19**, in which they will be stored for longer, or for temporarily parking the coils coming from the limited-access area **19** and intended to be loaded onto a lorry or other means of transport and sent elsewhere.

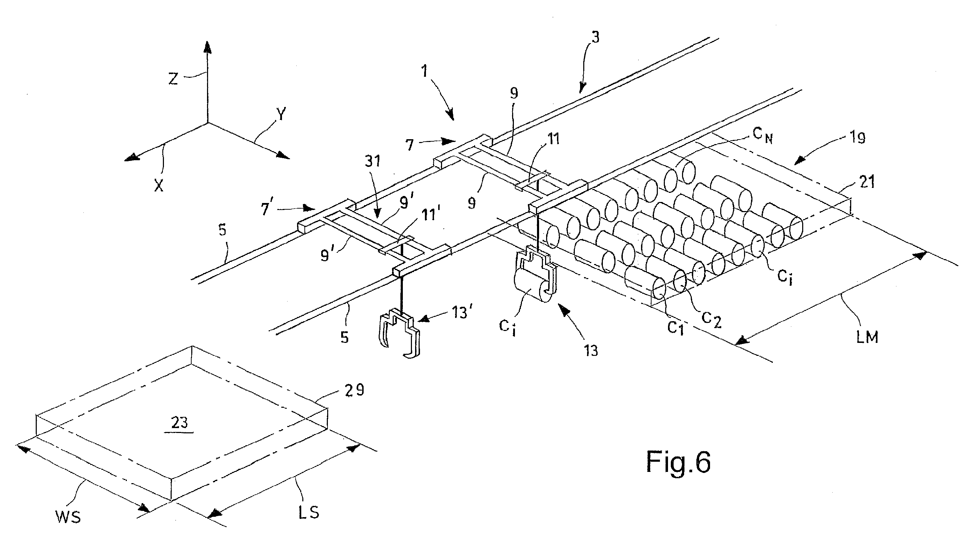

Advantageously, the temporary store area **23** is at least partially fenced by suitable anti-intrusion barriers **29** (Figure **6**) which can for example be of the same type as the anti-intrusion barriers of the limited-access area **19**.

Preferably, in the anti-intrusion barriers **29** suitable openings are formed, like for example doors, gates or dividing walls, possibly similar to those of the barriers **21**, such as to allow access to people or means like lift trucks, tractors, lorries or other motor vehicles in the area **23**, for example to carry or pick up metal sheet coils or other loads C.

Preferably, the temporary store area **23** is substantially smaller with respect to the limited-access area **19**, also indicated in the present description as definitive store area **19**, for example **10-20** times smaller. Concerning this, the temporary store area **23** can for example indicatively extend for between **30-1000** square metres, between **50-500** square metres, between **100-300** square metres or between **150-250** square metres.

For example, the temporary store area **23** can be substantially rectangular or square in shape with side of **10** X **10** metres or **10** X **20** metres. Still concerning this, the limited-access area **19** can for example indicatively extend for between **300-6000** square metres, between **500-4000** square metres, between **1000-3000** square metres or furthermore between **1500-2500** square metres. For example, the limited-access area **19** can be substantially rectangular or square in shape with a length comprised between **30-500** metres, or between **100-200** metres, and width comprised between **10-30** metres or between **15-25** metres and for example equal to about **20** metres.

Advantageously, the temporary store area **23** is also provided with suitable cradles **25**, for example analogous to those of the limited-access area **19**, and arranged for receiving and positioning - with relative precision - the coils or other loads Cᵢ.

Preferably, the temporary store area **23** is located as close as possible to the limited-access area **19**, and for example they border one another so as to reduce the movements of the first overhead traveling crane or of the first overhead traveling cranes **3** to transfer the coils or other loads Cᵢ between the area temporary store **23** and the limited-access area **19**.

A system **1, 1'** according to the invention can possibly be provided with one or more second overhead traveling cranes **31** (Figure **6**) for unloading the coils or other loads Ci from the lorries, trains or ships that have transported them to the storage, distribution or retail centre, at the temporary store area **23** or vice-versa from such an area **23** to the lorries, trains or ships that must carry them away from the storage, distribution or retail centre.

The second overhead traveling crane(s) **31** can also be only manually controlled, i.e. be controlled only by a human operator and not by a completely automatic pilot.

Preferably, the second overhead traveling crane(s) **31** are mounted so as to be able to slide along the same two rails or other fixed sliding guides **5** on which the one or more first overhead traveling cranes **3** slide.

An example of operation of the system **1** described above will now be described.

Metal sheet coils or other loads Cᵢ, for example during the day, reach the distribution or retail centre for example through lorries, trains, ships or other means of transport.

these vehicles park close to the temporary store area **23**. A human operator, through a gun, hand-held device or other manual reader, reads the barcodes, Qcode or other automatic reading codes displayed on each coil or other load Cᵢ . For this purpose, each coil Cᵢ can for example be associated with a unique identifying number or code. The identifying data of each load Ci are sent to the logic unit **17** or other computer or logic unit - not shown - which manages the warehouse or other limited-access area **19**.

From this moment each coil or other load Cᵢ is for example acquired and inventoried as storage good.

After this the operator transfers the coils or other loads Cᵢ from the lorries or other means of transport to the temporary store area **23** through a lift truck, a tractor (not shown) or, for example in the case of relatively heavy loads Cᵢ, through the possible second overhead traveling crane or the second overhead traveling cranes **31**, for example driving the second overhead traveling crane **31** through a hand-held keypad and arranging the coils or other loads Cᵢ in the cradles **25** of the area **23**. If the operator, during these steps has to enter into the temporary store area **23**, for example on foot or aboard a lift truck, the alarm systems of the fencing **29** are partially or completely deactivated.

After this, the operator programmes, for example during the day, the transfer of the coils C**₁**, C**₂**, ... Cᵢ ... C_{N} from the area **23** to the restricted-access store **19**, and/or can also programme the transfer of a second number of coils C**₁**, C**₂**, ... Cᵢ ... C_{N} from the restricted-access store **19** to the loading yard **23** or to another temporary store area **23**.

In particular, the operator transmits to the logic unit **17** - for example through a keypad, or sending it a data file - the list of coils to be transferred, the date and time at which the transfer must be carried out and the destination position of each coil in the yard **23**. For this purpose each coil Cᵢ can for example be associated with a unique identifying number or code.

At the predetermined time, advantageously at night, the overhead traveling crane **3** controlled by the logic unit **17** automatically activates and starts to pick up the first coil C**₁** from the temporary store **23** with the grippers **13**.

Advantageously the logic unit **17** has previously stored the position of each coil C**₁**, C**₂**, ... Cᵢ ... C_{N} in the temporary store area **23** and in particular in the relative cradle **25**, and is therefore able to optimise the movements and the sequence of manoeuvres of the overhead traveling crane **3**, for example the acceleration and deceleration ramps of the various carriages of the overhead traveling crane **3** so as to reach the coils to be moved faster or with less energy consumption.

Once, for example, the first coil C**₁** has been reached, the grippers **13** grasp it, transport it automatically into the definitive store or other restricted-access area **19** and put them it there. The logic unit preferably stores the position, and in particular the cradle **25**, wherein the coil C**₁** has been deposited in the area **19** and adds such a coil from the list of those placed in the store **19**, or from its own internal memory or from the possible external database that manages the warehouse **19**. Again controlled by the logic unit **17**, the overhead traveling crane **3** then activates to pick up the second coil C**₂** from the area **23** and then in succession the following coils Cᵢ , Cⱼ provided for by the stored sequence and transfers them into the area **19**.

Advantageously, after having placed a new load Cᵢ in the restricted-access area **19** the logic unit **17** makes the overhead traveling crane **3** pick up another coil or other load Cⱼ from the area **19** and makes it transfer it to the temporary store area **23**; or vice-versa, after having placed a new load Cₖ in the area **23** the logic unit **17** makes the overhead traveling crane **3** pick up another coil or other load C_{k+**1**} and makes it transfer it to the area **19** so as to much better exploit the outward and return strokes of the overhead traveling crane, so that at least in the majority of times when the overhead traveling crane reaches the areas **19** or **23** it puts down one coil or other load and picks up another.

The advantage of this cross-over and simultaneous transfer of coils between the areas **19** and **23**, made possible and above all reliable by the logic unit **17**, is substantial, if one considers that currently the human operator who controls the overhead traveling crane **3**, in order to avoid errors, firstly completely empties the temporary store **23** of the arriving coils, and after fills them again with the coils to be sent; since it cannot exploit the return strokes, this procedure with manual control indicatively requires double the time of the aforementioned automatic procedure.

When the overhead traveling crane **3** operates in automatic mode to transfer the loads Cᵢ from the temporary store **23** to the definitive store **19** and vice-versa, preferably the alarms and other systems for detecting the intrusion of people or vehicles in the fencing **21, 29** are activated.

If the automatic cross-over transfer is carried out at night, the next morning the operator finds all of the coils to be sent that day in the area **23**; again with a lift truck or with the second overhead traveling crane **31** the coils can be picked up from the area **23** and loaded onto the lorry, train or ship that must carry them away, for example after having recorded the exit thereof from the store **19** and the sending through the aforementioned manual reader of barcodes, Q-codes or other codes with automated reading. The sending of the coils out can thus be recorded in the logic unit **17** or other computer or logic unit that manages the definitive store area **19**.

Alternatively, again at the predetermined time, the overhead traveling crane **3** controlled by the logic unit **17** can activate automatically and begin to pick up the first coil C**₁** from the restricted-access area **19** with the grippers **13**. Advantageously, the logic unit **17** has previously stored the position of each coil C**₁**, C**₂**, ... Cᵢ ... C_{N} in the restricted-access area **19** and therefore is able to optimise the movements and the sequence of manoeuvres of the overhead traveling crane **3**, for example the acceleration and deceleration ramps of the various carriages of the overhead traveling crane **3** so as to reach the coils to be moved faster or with less energy consumption.

Once for example the first coil C**₁** has been reached, the grippers **13** grasp it, transport it automatically to the yard **23** and put it down there. Thereafter, another overhead traveling crane **31**, crane or lift truck can pick up the coil C**₁** from the yard **23** for example to load it onto a lorry or a railway wagon.

The logic unit preferably stores the position in which the coil C**₁** has been put down in the yard **23** and eliminates such a coil from the list of those placed in the store **19**, or from its own internal memory or from the possible external database that manages the warehouse **19**. Again controlled by the logic unit **17**, the overhead traveling crane **3** then activates to pick up the second coil C**₂** and then in succession the following coils Cᵢ , Cⱼ provided for by the stored sequence.

Preferably, if through the anti-intrusion barriers **13, 29** or in general through the anti-intrusion system they detect the unauthorised entry or presence of a person in a limited-access area **19** or in the temporary store **23**, the logic unit **17** starts up a safety procedure for example stopping the movements of the overhead traveling crane **3** and emitting suitable alarm signals.

The logic unit **17** can for example be programmed, or in any case provided, to make the one or more overhead traveling cranes **3** pick up a series of loads Ci, Cj from the store or warehouse **19** and transfer them to the temporary store area **23** or other destination position **23**, or contrarily to make the one or more overhead traveling cranes **3** pick up a series of loads Ci, Cj from the temporary store area **23** or other destination position **23** and transfer them to the store or warehouse **19**, controlling the overhead traveling crane or overhead traveling cranes **3** in automatic mode, i.e. without further controls by a human operator, and making them operate continuously at least for a predetermined minimum automatic operating period, clearly without jeopardising the possible interruptions for safety reasons, for example because the logic unit **17** has detected the presence of people in the limited-access area **19**.

The predetermined minimum automatic operating period can for example be equal to **15** or **30** minutes, or to one, two, four or eight hours.

Clearly, the logic unit **17** can be programmed or in any case provided to stop the automatic operation of the overhead traveling crane **3** not only when the predetermined minimum automatic operating period has simply elapsed, i.e. upon the mere command of a timer, but also as soon as the overhead traveling crane or overhead traveling cranes **3** have transferred all of the loads Cᵢ, Cⱼ that the loading sequence provided for.

Thanks to the logic unit **17** and to the sensors **15**A-**15**C each overhead traveling crane **3** and more generally the entire moving system **1** is able to operate completely automatically, without the need for operators to guide and monitor the movements of the overhead traveling crane, or even to manage the records of the store **19**.

The system **1** can therefore operate in the absence of staff or with much less staff with respect to current systems; in particular, it can be made to operate at night, exploiting possible more advantageous electrical energy rates.

Since the overhead traveling cranes **3** are capable of grasping, transporting and releasing the loads Cᵢ completely automatically and autonomously, i.e. without being guided or monitored by an operator located close to the loads themselves, during the picking up and putting down manoeuvres of the loads Cᵢ it is possible to almost totally remove the staff from the limited-access areas **19** where the manoeuvres take place, substantially reducing, if not completely eliminating, the risk of accidents and injury to people.

An advantageous aspect of the overhead traveling crane with automatic operation **3** derives from the combination with the temporary store area **23**. Often, indeed, the definitive store **19** has dimensions, for example: a length LM of many hundreds of metres, and in any case often such as to ensure that the overhead traveling crane **3**, due to its low advancing speed, takes many minutes, for example **10-15** minutes or even more, for example to pick up a coil Cᵢ from a lorry and transport it directly into the store **19**.

Therefore, it is more advantageous to provide a temporary store area **23** that, thanks to its much smaller dimensions with respect to the definitive store **19**, makes it possible to unload a lorry very quickly and to temporarily house its entire load, together with the loads of the other lorries that are generally foreseen to reach the system **1, 1'** in a day. Thereafter, the coils Cᵢ can be transferred more calmly from the temporary store **23** to the definitive store **19** through the automatic overhead traveling crane **19** that operates completely automatically and preferably at night.

In other words, the present invention makes it possible to reduce both the management costs of a system for moving loads, and the risks of accident for the staff working close by. The anti-intrusion barriers **21** described above allow the risk of injury to people to be reduced further.

The embodiments described above can undergo various modifications and variations without departing from the scope of protection of the present invention.

For example a system according to the invention can be used to move not only metal sheet rolls but also rolls of paper or cardboard and other loads C of different types, for example rolls of fabric or nonwoven fabric, or even rolls of film of plastic material. The grippers **13** can be provided to grasp and/or transport two or more coils Cᵢ, Cⱼ simultaneously and/or the overhead traveling crane **3** can also be provided to transport and move two or more coils Cᵢ simultaneously on the same gripper **13** or on several grippers **13**.

Moreover, all of the details can be replaced by technically equivalent elements. For example, the materials used, as well as the dimensions, can be whatever according to the technical requirements.

For example, the overhead traveling cranes **3, 31** can be replaced with gantry cranes, bridge cranes or lame gantry cranes sliding on rails, rubber wheels or tracks, or other cranes and hoists of different types.

It should be understood that an expression of the type "A *comprises* B, C, D" or "A *is formed from* B, C, D" also comprises and describes the particular case in which "A *consists of* B, C, D". The examples and lists of possible variants of the present application should be considered to be non-exhaustive lists.

## Claims

1. System (**1**) for handling loads in form of coils or rolls (Cᵢ) such as for example metal sheet coils, comprising:
- one or more first cranes (**3**) selected from the following group: overhead traveling crane (**3**), gantry crane, bridge crane, lame gantry crane;
- one or more sensors (**15**A-**15**C) arranged for detecting the presence and/or the position of a predetermined load (Cᵢ) to be moved;
- a logic unit (**17**) programmed, or in any case provided, for controlling the movements with which the one or more overhead traveling cranes or other cranes (**3**) grasp, transport and release the loads to be moved according to the detections of the one or more sensors (**15**A-**15**C).

2. System according to claim **1**, wherein the logic unit (**17**) is programmed, or in any case provided, for automatically controlling the steps of picking up a predetermined load (Cᵢ) from a store or warehouse (**19**) by using the one or more overhead traveling cranes (**3**), transferring it to another predetermined position (**23**) and releasing it there.

3. System according to claim **2**, wherein the logic unit (**17**) is programmed, or in any case provided, for automatically controlling the steps of picking up a plurality of predetermined loads (Cᵢ, Cⱼ) from a store or warehouse (**19**), possibly in sequence, by using the one or more overhead traveling cranes (**3**), transferring them to respective other predetermined positions (**23**) and releasing them there.

4. System (**1**) according to claim **1**, comprising one or more anti-intrusion barriers (**21**, **29**) which delimit a predetermined protected or limited-access area (**19**, **29**) in which the one or more overhead traveling crane or other crane (**3**) move and operate and which are arranged for preventing or detecting the entry of people in the protected or limited-access area (**19**, **29**).

5. System (**1**) according to claim **4**, wherein the one or more anti-intrusion barriers (**21**, **29**) comprise one or more elements selected from the following group:
- walls, grids or substantially vertical meshes;
- palisades, fences or other physical enclosures;
- electronic or opto-electronic barriers comprising at least one emitter arranged for emitting electromagnetic radiation beams, and at least one receiver arranged for receiving such beams, wherein such electronic or opto-electronic barriers are arranged for detecting disturbances of such beams caused by people interposing between the at least one emitter and the at least one receiver;
- a system for detecting the possible presence of people in the predetermined protected or limited-access area (**19**) irradiating with electromagnetic radiations or acoustic waves the inside of the predetermined protected or limited-access area (**19**).

6. System according to claim **1**, wherein the logic unit (**17**) is arranged for storing the position in which one or more predetermined loads (Cᵢ, Cⱼ) are positioned in a warehouse or store (**19**), and for subsequently predetermining, according to such stored positions, the controls for moving the at least one overhead traveling crane or other crane (**3**) for subsequently picking up such predetermined loads, possibly in sequence.

7. System according to claims **2** or **3**, wherein the logic unit (**17**) is arranged for storing the positions in which the one or more overhead traveling cranes or other cranes (**3**) have arranged the plurality of predetermined loads (Cᵢ, Cⱼ) in the warehouse or store (**19**), and for subsequently predetermining, according to such stored positions, the controls for moving the at least one overhead traveling crane or other crane (**3**) for subsequently picking up such predetermined loads (Cᵢ, Cⱼ) from the store or warehouse (**19**), possibly in sequence.

8. System according to claim **1**, comprising a temporary store (**23**) and a definitive store (**19**).

9. System according to claims **4** and **8**, wherein the definitive store (**19**) and the temporary store (**23**) each form a protected or limited-access area delimited by a respective anti-intrusion barrier (**21**, **29**).

10. System according to claim **8**, wherein the temporary store (**23**) and/or the definitive store (**19**) is provided with one or more cradles (**25**) each arranged for receiving and keeping in position a load to be moved such as for example a metal sheet coil (Cᵢ).

11. System according to claim **1**, comprising at least one second crane (**3**) selected from the following group: overhead traveling crane, gantry crane, bridge crane, lame gantry crane.

12. System according to claim **1** or **8**, wherein the logic unit (**17**) is programmed, or in any case provided, for carrying out the following steps:
- arranging a first load (Cᵢ) in the temporary store (**23**) or in the definitive store (**19**) through the one or more first cranes (**5**);
- before taking the one or more first cranes (**3**) away from the temporary store (**23**) or definitive store (**19**), respectively, picking up a second load (Cⱼ) from it.

13. Method for handling loads (Cᵢ) in form of coils or rolls, such as for example metal sheet coils, through a system having the features according to claim **1**, comprising the following steps:
S**12.**a) acquiring - through the sensors (**15**A-**15**C) - and storing a first position of a predetermined load (Cᵢ) stored in a definitive store or other protected or limited-access area (**19**);
S**12**.b) transmitting the stored information on the first position of the predetermined load (Cᵢ) to the logic unit (**17**);
**S12**.c) transmitting - to the logic unit (**17**) - information on a second predetermined destination position of the predetermined load (Cᵢ);
S**12**.d) processing, through the logic unit (**17**), a sequence of movements or other operations with which the at least one first overhead traveling crane or other first crane (**3**) can transfer the predetermined load (Cᵢ) from the first to the second predetermined position;
S**12**.e) actuating, through the logic unit (**17**), the at least one overhead traveling crane or other crane (**3**) according to the sequence of movements processed with the step S**12**.d);
wherein the steps S**12**.a, S**12**.b, S**12**.d and S**12.3** are automatically controlled by the logic unit without the latter being controlled by an operator while performing such steps.

14. Method for handling loads (Cᵢ) in form of coils or rolls, such as for example metal sheet coils, through a system having the features according to claim **1**, comprising the following steps:
S**13**.a) through the one or more overhead traveling cranes or other cranes (**3**) arranging one or more predetermined loads (Cᵢ, Cⱼ) in un store or warehouse (**19**) ;
S**13**.b) through the logic unit (**17**) memorize the position in which the one or more predetermined loads (Cᵢ, Cⱼ) are arranged in the definitive store or other predetermined protected area (**19**);
S**13**.c) through the logic unit (**17**) and according to the memorizations of step S**13**.b) determining the trajectory and the path that the one or more overhead traveling cranes or other cranes (**3**) must follow to pick up the one or more predetermined loads (Cᵢ, Cⱼ) from the definitive store or other predetermined protected area (**19**).

15. Method according to claim **13**, comprising the following step:
S**14**.a) according to the determinations of step S**13**.c) and through the logic unit (**17**) automatically controlling the one or more overhead traveling cranes or other cranes (**3**) so that they pick up the one or more predetermined loads (Cᵢ, Cⱼ) from the definitive store or other protected area (**19**).
